(19) Europäisches Patentamt

European Patent Office

Office européen des brevets

(11) Publication number: **0 162 627 B1**

## (12) EUROPEAN PATENT SPECIFICATION

(45) Date of publication of patent specification: **21.11.91**  (51) Int. Cl.⁵: **G02B 6/26,** G02B 26/02, G02B 6/28

(21) Application number: **85303194.6**

(22) Date of filing: **03.05.85**

(54) **Signal splitter for fiber optics system.**

(30) Priority: **22.05.84 US 612932**

(43) Date of publication of application:
**27.11.85 Bulletin 85/48**

(45) Publication of the grant of the patent:
**21.11.91 Bulletin 91/47**

(84) Designated Contracting States:
**BE CH DE FR GB IT LI NL SE**

(56) References cited:
**EP-A- 0 080 887**
**EP-A- 0 099 224**
**EP-A- 0 102 264**
**EP-A- 0 109 904**

(73) Proprietor: **KAPTRON INC.**
**3460 W. Bayshore Road**
**Palo Alto California94303(US)**

(72) Inventor: **Kapany, Narinder S.**
**2126 Greenways Drive**
**Woodside California 94061(US)**
Inventor: **Unterleitner, Fred C.**
**3732 Grove Avenue**
**Palo Alto California 94303(US)**

(74) Representative: **Sturt, Clifford Mark et al**
**MARKS & CLERK 57-60 Lincoln's Inn Fields**
**London WC2A 3LS(GB)**

## Description

This invention relates to a signal splitter for an optical fiber communications system.

U.S. Patent No. 4,329,017 describes a number of coupling modules including two embodiments of a splitter for communicating optical information between an input optical fiber and a plurality of output optical fibers. The splitters (as well as the other modules) utilize concave imaging surfaces as defined by a reflective coating on the outside of a convex surface of a transparent body. The first splitter embodiment utilizes a reflective surface having abutting spherical surface segments with the same radius of curvature but having slightly displaced centers of curvature. The center of curvature of each spherical surface segment is located midway between the end of the input fiber and the end of the corresponding output fiber. Generally, an N-way splitter utilizes N wedge-shaped surface segments subtending angles of 360°/N and having their respective sphere centers in a regular polygonal array surrounding the end of the input fiber.

The second splitter embodiment is optically similar, but differs geometrically in that plane reflectors are interposed between the fiber ends and the spherical surface segments.

The above described splitters are rugged and compact, but require transparent bodies having special configurations which are not easily made. For example, a splitter having spherical segments requires that a plano-convex element be cut into segments, and then the segments be aligned relative to one another and to the fiber locations.

The present invention provides a splitter which is easily constructed without resort to specially shaped components. The configuration is especially well suited for a two-way splitter.

Briefly, the splitter according to the present invention includes at least two spherical surface segments disposed in the path of the cone of light emanating from the input fiber, the segments having unequal radii of curvature and being at unequal distances from the input fiber.

A preferred splitter that operates to couple light between an input fiber and at least first and second output fibers comprises at least first and second spherical reflectors. The first reflector is disposed in the light path so as to intercept a first predetermined fraction of the light cone emanating from the input fiber, and has a center of curvature midway between the input fiber end and the first output fiber end. The second reflector is disposed generally downstream of the first reflector so as to intercept a second predetermined fraction of the light cone, and has a center of curvature midway between the input fiber end and the second output fiber end.

The invention in its broadest scope is defined in each of Claims 1, 2 and 3 below.

A first embodiment of a two-way splitter comprises a transparent body having a spherical surface which intercepts the entire light cone, but has a reflective coating on only part (typically one half) to define the first reflector. The second spherical reflector is located behind it and intercepts the remaining light.

A second embodiment of a two-way splitter utilizes a transparent body having a portion defining a spherical reflective surface segment intercepting and imaging one-half the light cone to define the first reflector. The second spherical reflector is disposed downstream thereof to intercept and image the second half.

It will be appreciated that both of the above embodiments may be fabricated without requiring complex configurations. Both may be constructed from a cylindrical spacer, a plano-convex element, and a plano-concave element (reflectively coated on its concave side). Beyond the standard procedures for aligning the three fibers and the piano-concave element relative to the other elements, the first embodiment requires nothing more complex than reflectively coating one-half of the convex surface of the plano-convex element, while the second embodiment requires nothing more complex than cutting the plano-convex element diametrically.

In a third embodiment of the invention a two-way splitter comprises a first transparent body having a spherical convex surface which intercepts the entire light cone. A plano-concave transparent spacer, the concave surface of which is complementary to the convex surface of the first transparent body, is assembled with the first transparent body to form a planar surface behind the convex surface of the first transparent body. A plano-convex transparent body is mounted on the planar surface of the spacer to provide a second convex surface. A first concave reflective surface is provided by locating a reflective medium between the mating surfaces of the first transparent body and the spacer, and a second concave reflective surface is provided by applying a reflective medium to the second convex surface. The first concave reflective surface is effective to reflect light from an input fiber to a first output fiber whilst the second concave reflective surface is effective to reflect light from the input fiber to a second output fiber.

The ratio in which input light will be split between the output fibers is determined by the proportion of the input light cone which is intercepted by the first concave reflective surface. If the first concave reflective surface intercepts one-half of the light cone, the remaining one-half will be reflected by the second concave reflective surface, and the input light will be split equally between the output fibers.

The size of the first concave reflective surface may be fixed, in which case the reflective medium between the mating surfaces of the first transparent body and the spacer may conveniently be provided by a metal film coating on the first transparent body. In the alternative, the size of the first concave reflective surface may be variable, permitting adjustment of the ratio of split between the output fibers. A variable size first reflective surface can conveniently be provided if the reflective medium between the first transparent body and the spacer is in the form of a film of mercury which can be moved, e.g. by use of the so-called "electrowetting effect" (see Appl. Phys. Lett. 38, 207 (1980); J. Appl. Phys. 52, 6011 (1981); and Appl. Phys. Lett 40, 912 (1982)).

The invention will be better understood from the following description of preferred embodiments thereof given by way of example only, reference being had to the accompanying drawings, wherein:

Figure 1A is a simplified sectional view of a first embodiment of a splitter according to the present invention;

Figure 1B is an isometric view showing the first spherical reflector in the splitter of Figure 1A;

Figure 1C is a plot of reflectivity for the first spherical reflector;

Figure 2 is a simplified sectional view of a second embodiment of a splitter according to the present invention;

Figure 3A is a simplied sectional view of a third embodiment of a splitter according to the present invention;

Fig. 3B is an isometric view showing the first spherical reflector in the splitter of Fig. 3A;

Fig. 4 is a simplified sectional view of a fourth embodiment of a splitter according to the present invention;

Fig. 5 is an isometric view showing an alternate form for the first spherical reflector;

Fig. 6 is a plot of reflectivity for an apodized spherical reflector; and

Fig. 7 is a simplified sectional view of a variable ratio splitter according to the present invention.

## DESCRIPTION OF THE PREFERRED EMBODIMENTS

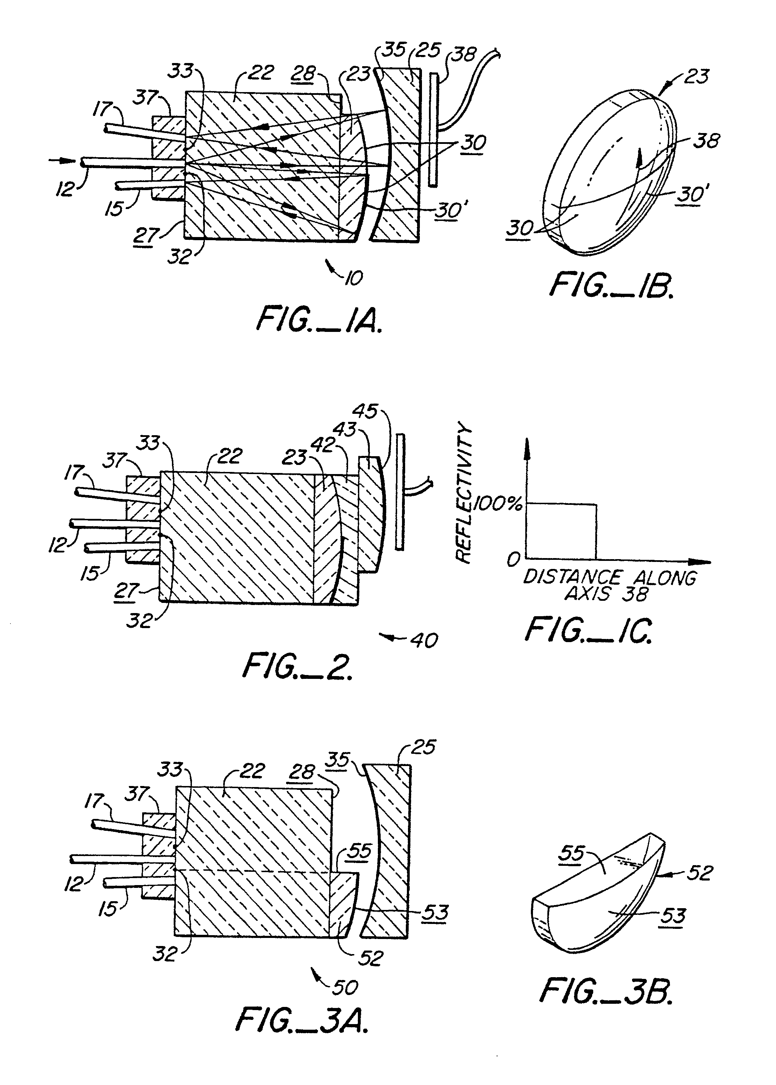

Fig. 1A is a simplified cross-sectional view of a first embodiment of a two-way splitter module 10 according to the present invention. Splitter module 10 operates to divide the light emanating from an input fiber 12 between first and second output fibers 15 and 17. In some applications, light will be input on one or both of fibers 15 and 17 to provide mixing or duplexing, but operation as a splitter is envisioned as the primary application. Therefore, module 10 will hereinafter be referred to as splitter 10.

Splitter 10 includes a transparent imaging body defined by a cylinder 22 and a plano-convex element 23, and a separate reflector provided by a plano-concave element 25. More particularly, cylinder 22 has parallel plane end faces 27 and 28. Element 23 has its flat surface cemented to end face 28 and has a spherical surface 30 characterized by a radius of curvature equal to the total thickness of cylinder 22 and element 23 so that the center of curvature, designated 32, lies substantially in the plane of end face 27. Plano-concave element 25 is slightly spaced from convex surface 30 and has a spherical surface 35 having a center of curvature 33 lying substantially in the plane of end face 27 at a point spaced from center of curvature 32. Each of cylinder 22 and elements 23 and 25 has a cylindrical sidewall. The transverse diameters of these elements are large enough that none of the cone of light emanating from the end of fiber 12 impinges on any of the cylindrical sidewalls.

With additional reference to the isometric view of Fig. 1B, it may be seen that spherical surface 30 carries a reflective coating over half its surface. The coated portion is denoted 30' and shown as a heavy line in Fig. 1A. Fig. 1C is a plot of reflectivity as a function of distance along an axis 38 (in Fig. 1B). As can be seen, the reflectivity drops sharply from a value near 100% to a value near zero. Spherical surface 35 carries a reflective coating over at least those portions of the surface not occluded by the reflective portion of surface 30. The region between spherical surfaces 30 and 35 may be an air space (in which case the non-reflective portion of surface 30 preferably carries an anti-reflection coating), or may be filled with index matching cement (which would render the anti-reflection coating unnecessary).

The ends of input fiber 12 and output fibers 15 and 17 are registered to end face 27. Center of curvature 32 is midway between the ends of fibers 12 and 15; center of curvature 33 is midway between the ends of fibers 12 and 17. The separations of the fiber ends are exaggerated for clarity. The fiber ends may be collinearly aligned in a fiber support 37 of the type shown in co-pending European patent application EP 0080887 or may simply be cemented to end face 27. Alternately the fiber ends can be disposed at the vertices of an equilateral triangle in a close-packed configuration.

The geometric and optical properties of spherical reflectors are described in detail in U.S. Patent No. 4,329,017, and in co-pending European patent application EP 0080887 the disclosure of which are hereby incorporated by reference. In brief, it is pointed out that the center of curvature is a self-conjugate point, and a plane passing therethrough is a self-conjugate plane. An object point in the plane and slightly displaced from the center of curvature is imaged at an optically conjugate image point in the plane, which image point is equally spaced on the other side of the center of curvature.

It will thus be appreciated that the ends of fibers 12 and 15 are at conjugate locations with respect to the reflective surface segment defined by the coated portion of surface 30 while the ends of fibers 12 and 17 are at conjugate locations with respect to the reflective surface segment defined by surface 35. Accordingly, of the light emanating from fiber 12, that portion reflected from surface 30 is imaged onto the end of fiber 15, while the remaining portion is imaged onto the end of fiber 17. A monitoring function may be provided by allowing a small fraction of the light hitting surface 35 to pass therethrough to a suitably positioned detector, shown schematically as 38. This may be accomplished either by having the coating on surface 35 less than 100% reflective or by providing a small region devoid of coating.

Fig. 2 is a simplified cross-sectional view of a second embodiment of a two-way splitter 40. In this, as well as other additional embodiments, corresponding reference numerals are used for corresponding elements. As in the case of splitter 10 of Fig. 1A, splitter 40 includes a cylinder 22 and a plano-convex element 23. However, instead of element 25 of Fig. 1A, splitter 40 includes a plano-concave element 42 and a second plano-convex element 43. Plano-concave element 42 has a concave surface closely matched to convex surface 30 of element 23, and is cemented thereto in concentric relation. Plano-convex element 43 has a reflectively coated convex surface 45 which provides the downstream reflector corresponding to coated surface 35 in element 25 of the embodiment of Fig. 1A. Fabrication typically occurs by cementing elements 22, 23, and 42 prior to aligning fibers 12 and 15, and then cementing the flat surfaces of elements 42 and 43 so that fibers 12 and 17 are conjugate with respect to surface 45. This embodiment is slightly more complex than the embodiment of Fig. 1A in that it requires an extra part. However, it will be noted that the cement interfaces are of uniform thickness, which is desirable in cases where increased thermal stability is needed.

Fig. 3A is a simplified cross-sectional view of a third embodiment of a two-way splitter 50 according the present invention. This embodiment differs from the embodiment of Fig. 1A in that plano-convex element 23 is replaced by a half-element 52 having a convex surface 53 whose center of curvature (also denoted 32) is located midway between the ends of fibers 12 and 15. Fig. 3B is an isometric view showing half-element 52. Half-element 52 is formed by cutting a full plano-convex element along a plane 55 that is perpendicular to the flat surface of the element and passes through center of curvature 32. The construction is otherwise the same as splitter 10 of Fig. 1A, and includes cylinder 22 and plano-concave element 25 in the previously described relationship. In this case, if the space between end face 28 and concave reflectively coated surface 35 is an air space, the need for an anti-reflection coating on the exposed portion of end face 28 is somewhat greater than in the case of the embodiment of Figs. 1 and 2, since the angle of incidence is further removed from normal incidence.

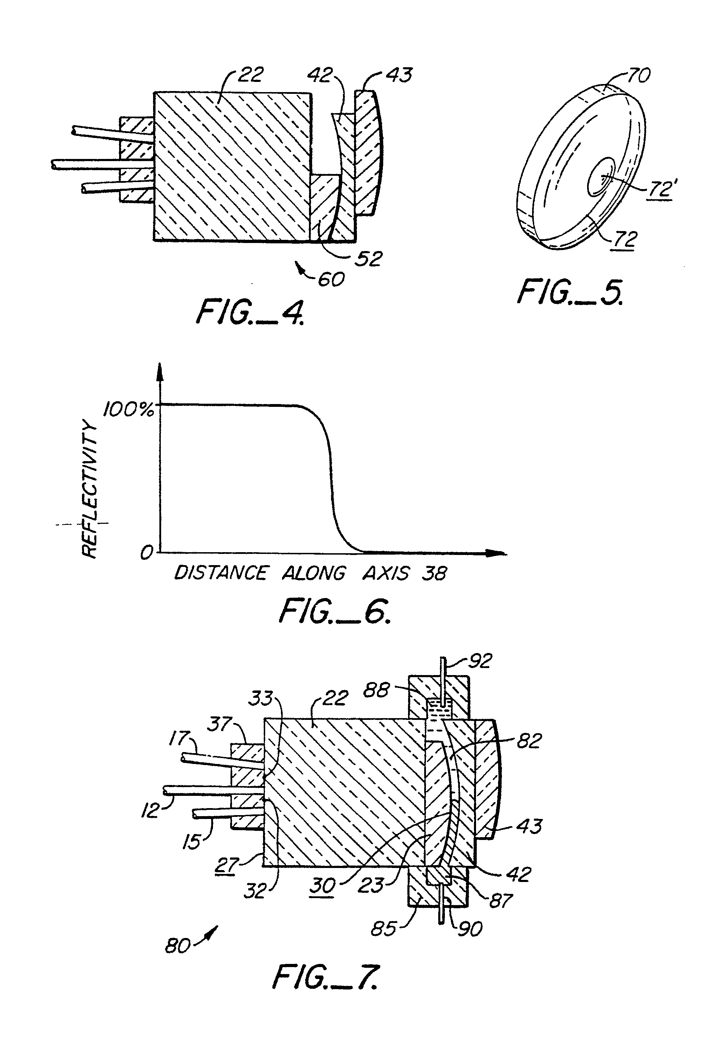

Fig. 4 is a simplified cross-sectional view of a fourth embodiment of a two-way splitter 60 according to the present invention. Splitter 60 utilizes the half-element 52 as in the embodiment of Fig. 3A but utilizes the pair of elements 42 and 43 as in the embodiment of Fig. 2 in order to provide the increased thermal stability.

It will be seen that the choice between the embodiments of Figs. 1A-2 and those of Figs. 3A-4 involves a tradeoff. The former have the benefit of not requiring any cutting of standard shaped lens elements, but do require that convex surface 30 of element 23 be coated over only half its extent. The embodiments of Figs. 3A-4, on the other hand, require cutting a plano-convex lens element in half, but allow the entire surface to be coated.

In the embodiments of Figs. 1A-4, the first spherical reflector is bounded by the plane perpendicular to the flat surface of the plano-convex element and passing through the center of curvature. The result is that the first reflector intercepts one-half of any mode that is present so as to provide substantially mode-insensitive splitting. However, some applications impose constraints that render such a configuration unsuitable. For example, an application with signals incoming on either of fibers 15 and 17 would require very low cross-talk between fibers 15 and 17. Ideally, since the ends of fibers 15 and 17 are not at optically conjugate locations with respect to either of the two reflectors, such cross-talk would not be a problem. However, since the index match of the cement interface at the fiber ends is inevitably imperfect, a small portion of the light being imaged on the end of fiber 12 would be reflected, and half of the reflected light would be communicated to the other channel.

Fig. 5 is an isometric view showing an alternate form for the first spherical reflector. A plano-convex element 70 (corresponding to element 23 of Fig. 1A) has a spherical surface 72 having a circular reflectively coated portion 72'. The reflective portion is sized to intercept the portion of the light cone closest to the axis. Alternately, a complete element of reduced diameter could be used in a manner analogous to half-element 52 of Fig. 3A.

It can be seen that a splitter having a reflector such as that provided by element 70 provides a splitting ratio that is highly mode-sensitive. Thus, small-angle modes will be coupled entirely to fiber 15 while large-angle modes will miss reflective portion 72' and be coupled entirely to fiber 17. However, this mode-sensitivity is precisely what reduces cross-talk. Of the light from fiber 15, the portion reaching fiber 12 will have preferentially small-angle modes. When the small fraction is reflected from the cement interface, it will have a small cone angle and will be coupled by reflective surface portion 72' back into fiber 15.

In all the embodiments described above, the boundary of the first reflector is sharply defined. However, the sharp boundary leads to a certain amount of diffraction loss, and for monomode splitters it is sometimes desirable to provide a graded (or apodized) boundary. Fig. 6 is a plot of reflectivity for a reflector coated to provide a graded boundary. The plot corresponds to that of Fig. 1C. In contrast to the plot of Fig. 1C, the reflection coefficient in Fig. 6 is not a step function, but rather decreases from a value near 100% to a value near zero over an interval on the order of a millimeter.

All the embodiments described above provide a fixed splitting ratio. Fig. 7 is a simplified cross-sectional view of a variable-ratio splitter 80 which relies on the continuous electrowetting effect as described in an article entitled "Electrowetting Switch for Multimode Optical Fibers," J.L. Jackel et al, Applied Optics, Vol. 22, No. 11 (1 June 1983).

The general geometry of splitter 80 is similar to that of splitter 40 of Fig. 2, and corresponding reference numerals are used where appropriate. Plano-convex element 23 is not coated on its convex surface 30. Plano-concave element 42 has a radius of curvature on the order of 0.1 mm greater than the radius of curvature of surface 30, and is spaced therefrom by a corresponding distance to define an interstice 82 of generally uniform radial thickness. A fluid-tight reservoir 85 surrounds and is in fluid communication with interstice 82. A volume of mercury 87 fills a portion of the reservoir while a volume 88 of index-matching electrolyte fills the remaining portion. It is noted that capillary action actually causes the electrolyte to surround the mercury completely. Suitably placed electrodes 90 and 92 allow an electric field to be applied along the interstice. The application of the electric field causes a surface-tension gradient which induces controlled movement of the mercury into and out of interstice 82. Thus, by varying the electric field, the degree to which the mercury intercepts the light cone can be varied. Since the splitting ratio can be varied between 0 and 1, variable-ratio splitter 80 can also operate as a switch.

The splitter of the present invention can also be implemented in an airspace configuration where most or all of the path between the fiber ends and the reflectors is in air rather than glass. Such a configuration utilizes elements corresponding to elements 42 and 43, without elements 22 and 23 (or 52). The plano-concave element corresponding to element 42 is reflectively coated on a portion of its concave surface to define the first reflector. Alternately, the plano-concave element can be cut, and coated over its entire concave surface. The fiber ends and uncoated portion of the plano-convex element carry an anti-reflection coating.

In summary, it may be seen that the present invention provides a construction for splitters that simplifies even further the construction of the previous design of splitters. While the above provides a full and complete description of the preferred embodiments of the present invention, various modifications, alternate constructions, and equivalents may be employed without departing from the scope of the invention. For example, while two-way splitters are shown, there is no need that this be the case. Rather, by suitably stacking curved surfaces with appropriate portions carrying reflective coatings, more than two output channels may be provided. Additionally, while a two-way splitter is preferably symmetric in that the signal levels provided to both the output channels are the same, the construction of the present invention facilitates unequal splitting if desired, since a smaller portion of element 23 may be coated or a smaller section than the half-element 52 may be used. Therefore, the above description and illustrations should not be construed as limiting the scope of the invention which is defined by the appended claims.

## Claims

1.  An optical coupler for communicating optical information between an input fibre and at least two output fibres, the coupler comprising: means for registering an end of said input fibre at an input fibre location; means for registering respective ends of said output fibres at respective output fibre locations; the input and output fibres being non-contiguous at the fibre locations and a spherical reflector respectively associated with each output fibre, each reflector intercepting a different sector or segmental portion of the circular cross-section of the cone of light emanating from the input fibre and having a centre of curvature between the input fibre location and the associated output fibre location to reflect the intercepted light to the respective one of the output fibres characterised in that the spherical reflectors (30, 35) are of different radii of curvature and are located at different distances from the input fibre (12) location.

2. An optical coupler for communicating optical information between an input fibre and at least two output fibres, the coupler comprising: means for registering an end of said input fibre at an input fibre location; means for registering respective ends of said output fibres at respective output fibre locations disposed on opposite sides of the input fibre location; and a spherical reflector respectively associated with each output fibre, each reflector intercepting a different predetermined fraction of the cone of light emanating from the input fibre and having a centre of curvature between the input fibre location and the associated output fibre location to reflect the intercepted light to the respective one of the output fibres, the input and output fibre locations and centres of curvature all lying in a common plane; characterised in that the spherical reflectors (30, 35) are of different radii of curvature and are located at different distances from the input fibre (12) location.

3. An optical coupler for communicating optical information between an input fibre and at least two output fibres, the coupler comprising: means for registering an end of said input fibre at an input fibre location; means for registering respective ends of said output fibres at respective output fibre locations; and a spherical reflector respectively associated with each output fibre, each reflector intercepting a different predetermined fraction of the cone of light emanating from the input fibre and having a centre of curvature between the input fibre location and the associated output fibre location to reflect the intercepted light to the respective one of the output fibres characterised in that the spherical reflectors (30, 35) are of different radii of curvature and are located at different distances from the input fibre (12) location, and in that one of the reflectors intercepts a central, conical portion of the cone of light emanating from the input fibre, the other reflector intercepting the remaining, peripheral, portion thereof.

4. An optical coupler according to claim 1, 2 or 3, characterised in that the portion of the cone intercepted by the spherical reflector (30) located nearest to the input fibre (12) is non-variable.

5. An optical coupler according to claim 4, characterised in that the coupler comprises a transparent body (22, 23) having said input fibre and output fibre locations situated at one end face thereof and having a spherical convex surface (30) at the opposite end face thereof, said spherical convex surface (30) intersecting the entire cone of light emanating from the input fibre (12) but having a reflective coating on part only (30') of its surface thereby to define the spherical reflector nearest to the input fibre (12).

6. An optical coupler according to claim 4 as appendant to claim 1 or 2, characterised in that the coupler comprises a transparent body (22, 52) having said input fibre and output fibre locations situated at one end face thereof and having a spherical convex surface (53) at the opposite end face thereof, said spherical convex surface (53) intersecting part only of the cone of light emanating from the input fibre (12) and having a reflective coating on the entire surface thereof which is located in the path of light emanating from the input fibre thereby to define the spherical reflector nearest to the input fibre.

7. An optical coupler according to claim 6, characterised in that the transparent body (22, 52) comprises a cylindrical element (22) having the input fibre and output fibre locations situated at one, planar end face thereof, and a plano-convex element (52), comprising said spherical convex surface, secured to the other planar, end face of the cylindrical element, the plano-convex element (52), when viewed in a direction parallel to the axis of the sylindrical element, being sector shaped.

8. An optical coupler according to claim 7, characterised in that the angular extent of the sector is 180° so that the plano-convex element (52) is semi-circular when viewed in a direction parallel to the axis of the cylindrical element (22).

9. An optical coupler according to claim 5, characterised in that the transparent body comprises a cylindrical element (22) having the input fibre and output fibre locations situated at one, planar, end face thereof, and a plano-convex element (23) secured to the other, planar, end face of the cylindrical element (22).

10. An optical coupler according to any of claims 5 to 9, characterised in that a plano-concave element (42) having a radius of curvature matched to the convex surface (30) is assembled with the transparent body (22, 23) to provide a plane surface on the side of the plano-concave element (30) remote from the input and output fibre locations, a further plano-convex element (43) having a reflective coating on the convex surface (45) thereof being mounted on the plane surface to provide a second of said spherical reflectors (45).

11. An optical coupler according to claim 1 or 2, characterised in that the coupler comprises a transparent body (22, 23) having the input and output fibre locations at one end face thereof and having a spherical convex surface (30) at the opposite end face thereof, a further surface being located on the side of the convex surface (30) remote from the input fibre (12) to define a gap (82) therebetween bounded on one side by the convex surface (30), means being provided to introduce a controllable amount of reflective material (87) into said gap (82) whereby a reflector of controllably variable size and of radius equal to that of the convex surface (30) is formed, said reflector consituting the nearest of said spherical relectors to said input fibre (12).

12. An optical coupler according to claim 11 characterised in that the further surface is a surface of a body which defines a spherical reflector which intercepts the portion of the cone of light not intercepted by the variable size reflector and which reflects such light to the output fibre location associated therewith, the coupler including: means defining a reservoir in fluid communication with said gap (82); a volume of mercury (87) normally occupying a first portion of said reservoir and gap; a volume of electrolyte normally occupying a remaining second portion of said reservoir and gap; a first electrode (90) disposed in the portion of said reservoir normally occupied by said volume of mercury; and a second electrode (92) disposed in the portion of said reservoir normally occupied by said electrolyte; whereupon the application of a voltage across said electrodes causes a surface tension gradient which induces a controlled movement of said mercury into said gap thereby providing a controllably variable degree of interception of said cone of light.

## Revendications

1. Un coupleur optique servant à la transmission d'informations optiques entre une fibre d'entrée et au moins deux fibres de sortie, le coupleur comprenant: un moyen pour positionner une extrémité de ladite fibre d'entrée en un emplacement de la fibre d'entrée; un moyen pour positionner les extrémités respectives desdites fibres de sortie en des emplacements respectifs des fibres de sortie, les fibres d'entrée et de sortie n'étant pas contiguës à l'emplacement des fibres, ainsi qu'un réflecteur sphérique, associé respectivement avec chaque fibre de sortie, chaque réflecteur interceptant un secteur différent ou une partie segmentaire de la section circulaire du cône de lumière émanant de la fibre d'entrée et ayant un centre de courbure entre l'emplacement de la fibre d'entrée et l'emplacement associé de la fibre de sortie pour réfléchir la lumière interceptée sur la fibre de sortie correspondante, caractérisé en ce que les réflecteurs sphériques (30, 35) ont des rayons de courbure différents et sont agencés à des distances différentes de l'emplacement de la fibre d'entrée (12).

2. Un coupleur optique pour la transmission d'informations optiques entre une fibre d'entrée et au moins deux fibres de sortie, le coupleur comprenant: un moyen pour positionner une extrémité de ladite fibre d'entrée en un emplacement de la fibre d'entrée; un moyen pour positionner les extrémités respectives desdites fibres de sortie aux emplacements respectifs des fibres de sortie, agencés aux côtés opposés de l'emplacement de la fibre d'entrée, ainsi qu'un réflecteur sphérique associé respectivement avec chaque fibre de sortie, chaque réflecteur interceptant une fraction prédéterminée différente du cône de lumière émanant de la fibre d'entrée et comportant un centre de courbure entre l'emplacement de la fibre d'entrée et l'emplacement associé de la fibre de sortie pour réfléchir la lumière interceptée sur la fibre de sortie respective, les emplacements de la fibre d'entrée et des fibres de sortie et les centres de courbure se situant tous dans un plan commun, caractérisé en ce que les réflecteurs sphériques (30,35) ont des rayons de courbure différents et sont agencés à des distances différentes de l'emplacement de la fibre d'entrée (12).

3. Un coupleur optique pour la transmission d'informations optiques entre une fibre d'entrée et au moins deux fibres de sortie, le coupleur comprenant: un moyen pour positionner une extrémité de ladite fibre d'entrée en un emplacement de la fibre d'entrée; un moyen pour positionner les extrémités respectives desdites fibres de sortie aux emplacements respectifs des fibres de sortie, ainsi qu'un réflecteur sphérique associé respectivement avec chaque fibre de sortie, chaque réflecteur interceptant une fraction prédéterminée différente du cône de lumière émanant de la fibre d'entrée et comportant un centre de courbure entre l'emplacement de la fibre d'entrée et l'emplacement associé de la fibre de sortie pour réfléchir la lumière interceptée sur l'extrémité de la fibre de sortie correspondante, caractérisé en ce que les réflecteurs sphériques (30, 35) ont des rayons de courbure diffférents et sont agencés à des distances différentes de l'emplacement de la fibre d'entrée(12) et en ce que l'un des réflecteurs intercepte une partie centrale conique du cône de lumière émanant de la fibre d'entrée, l'autre réflecteur interceptant la partie restante prépiphérique du cône.

4. Un coupleur optique selon les revendications 1, 2 ou 3, caractérisé en ce que la partie du cône interceptée par le réflecteur sphérique (30) situé le plus près de la fibre d'entrée (12) n'est pas variable.

5. Un coupleur optique selon la revendication 4, caractérisé en ce que le coupleur comprend un corps transparent (22,23), lesdits emplacements de la fibre d'entrée et des fibres de sortie se trouvant sur une face d'extrémité de ce corps, sa face d'extrémité opposée ayant une surface sphérique convexe (30), ladite surface convexe (30) interceptant l'ensemble du cône de lumière émanant de la fibre d'entrée (12), mais comportant uniquement un revêtement réflecteur sur une partie (30') de sa surface pour définir le réflecteur sphérique le plus proche de la fibre d'entrée (12).

6. Un coupleur optique selon la revendication 4, dépendante de la revendication 1 ou 2, caractérisé en ce que le coupleur comprend un corps transparent (22, 52) , lesdits emplacements de la fibre d'entrée et des fibres de sortie étant situés sur une face d'extrémité de ce coprs, sa lace d'extrémité opposée ayant une surface sphérique convexe (53), ladite surface sphérique convexe (53) interceptant seulement une partie du cône de lumière émanant de la fibre d'entrée (12) et comportant un revêtement réflecteur sur toute la surface, située dans la trajectoire de la lumière émanant de la fibre d'entrée pour définir le réflecteur sphérique le plus proche de la fibre d'entrée.

7. Un coupleur optique selon la revendication 6, caractérisé en ce que le corps transparent (22, 52) comprend un élément cylindrique (22) , les emplacements de la fibre d'entrée et des fibres de sortie étant situés sur une face d'extrémité planaire de cet élément, ainsi qu'un élément plan-convexe (52), comprenant ladite surface sphérique convexe, fixé à l'autre face d'extrémité planaire de l'élément cylindrique, l'élément plan-convexe (52) étant en forme de secteur s'il est considéré dans une direction parallèle à l'axe de l'élément cylindrique.

8. Un coupleur optique selon la revendication 7, caractérisé en ce que l'extension angulaire du secteur est de 180°, de sorte que l'élément plan-convexe (52) est semi-circulaire s'il est considéré dans une direction parallèle à l'axe de l'élément cylindrique (22).

9. Un coupleur optique selon la revendication 5, caractérisé en ce que le corps transparent comprend un élément cylindrique (22), les emplacements de la fibre d'entrée et des fibres de sortie étant situés sur une face d'extrémité planaire de cet élément, ainsi qu'un élément plan-convexe (23) fixé à l'autre face d'extrémité planaire de l'élément cylindrique (22).

10. Un coupleur optique selon l'une quelconque des revendications 5 à 9, caractérisé en ce qu'un élément plan-convexe (42), ayant un rayon de courbure adapté à la surface convexe (30) est assemblé avec le corps transparent (22, 23) pour former une surface plane du côté de l'élément plan-concave (30), éloigné des emplacements de la fibre d'entrée et des fibres de sortie, un autre élément plan-convexe (43), comportant un revêtement réflecteur sur sa surface convexe (45), étant monté sur la surface plane pour former un deuxième desdits réflecteurs sphériques (45).

11. Un coupleur optique selon la revendication 1 ou 2, caractérisé en ce que le coupleur comprend un corps transparent (22, 23), les emplacements de la fibre d'entrée et des fibres de sortie étant situés sur une face d'extrémité de ce corps, la face d'extrémité opposée ayant une surface sphérique convexe (30), une surface supplémentaire étant située du côté de la surface convexe (30), éloignée de la fibre d'entrée (12) pour définir un espace (82) intermédiaire, limité d'un côté par la surface convexe (30), un moyen étant prévu pour introduire une quantité contrôlable de matière réflectrice (87) dans ledit espace (82), un réflecteur de taille variable et réglable et d'un rayon égal à celui de la surface convexe (30) étant ainsi formé, ledit réflecteur représentant le réflecteur sphérique le plus proche de ladite fibre d'entrée (12).

12. Un coupleur optique selon la revendication 11, caractérisé en ce que la surface supplémentaire est une surface d'un corps définissant un réflecteur sphérique interceptant la partie du cône de lumière non interceptée par le réflecteur de taille variable et réflechissant cette lumière sur l'emplacement de la fibre de sortie associé, le coupleur comprenant: un moyen définissant un réservoir communiquant avec ledit espace (82) par un fluide; un volume de mercure (87) occupant normalement une première partie desdits réservoir et espace; un volume d'électrolyte occupant normalement une deuxième partie restante desdits réservoir et espace; une première électrode (90) agencée dans la partie dudit réservoir normalement occupée par ledit volume de mercure, ainsi qu'une deuxième électrode (92) agencée dans la partie dudit réservoir normalement occupée par ledit électrolyte, l'application d'une tension sur lesdites électrodes formant un gradient à tension de surface, entraînant un mouvement contrôlé dudit mercure dans ledit espace, fournissant ainsi un degré variable et réglable d'interception dudit cône de lumière.

**Patentansprüche**

1. Eine optische Kopplungsvorrichtung zum Übertragen optischer Information zwischen einer Eingangsfaser und wenigstens zwei Ausgangsfasern, wobei die Kopplungsvorrichtung umfaßt:

eine Einrichtung zum genauen Anordnen eines Endes der Eingangsfaser an einem Eingangsfaserort; eine Einrichtung zum genauen Anordnen jeweiliger Enden der Ausgangsfasern an jeweiligen Ausgangsfaserorten; wobei die Eingangs- und Ausgangsfasern an den Faserorten nicht aneinanderstoßend angeordnet sind; und

einen sphärischen Reflektor, der jeweils jeder Ausgangsfaser zugeordnet ist, wobei jeder Reflektor einen unterschiedlichen Sektor oder Segmentbereich des kreisförmigen Querschnitts des Lichtkegels, der von der Eingangsfaser ausgeht, auffängt, und ein Krümmungszentrum zwischen dem Eingangsfaserort und dem zugehörigen Ausgangsfaserort aufweist, um das empfangene Licht zu der jeweiligen einen der Ausgangsfasern zu reflektieren, **dadurch gekennzeichnet,** daß die sphärischen Reflektoren (30, 35) unterschiedliche Krümmungsradien aufweisen und in unterschiedlichen Abständen von dem Eingangsfaserort (12) angeordnet sind.

2. Eine optische Kopplungsvorrichtung zum Übertragen optischer Information zwischen einer Eingangsfaser und wenigstens zwei Ausgangsfasern, wobei die Kopplungsvorrichtung umfaßt:

eine Einrichtung zum genauen Anordnen eines Endes der Eingangsfaser an einem Eingangsfaserort; eine Einrichtung zum genauen Anordnen jeweiliger Enden der Ausgangsfasern an jeweiligen Ausgangsfaserorten, die auf gegenüberliegenden Seiten von dem Eingangsfaserort angeordnet sind; und

einen sphärischen Reflektor, der jeweils jeder Ausgangsfaser zugeordnet ist, wobei jeder Reflektor einen unterschiedlichen vorbestimmten Teil des Lichtkegels, der von der Eingangsfaser ausgeht, empfängt, und ein Krümmungszentrum zwischen dem Eingangsfaserort und dem zugehörigen Ausgangsfaserort aufweist, um das empfangene Licht zu der jeweiligen einen von den Ausgangsfasern zu reflektieren, wobei die Eingangs- und Ausgangsfaserorte und Krümmungszentren alle in einer gemeinsamen Ebene liegen; **dadurch gekennzeichnet,** daß die sphärischen Reflektoren (30, 35) unterschiedliche Krümmungsradien aufweisen und in unterschiedlichen Abständen von dem Eingangsfaserort (12) angeordnet sind.

3. Eine optische Kopplungsvorrichtung zum Übertragen optischer Information zwischen einer Eingangsfaser und wenigstens zwei Ausgangsfasern, wobei die Kopplungsvorrichtung umfaßt:

eine Einrichtung zum genauen Anordnen eines Endes der Eingangsfaser an einem Eingangsfaserort; eine Einrichtung zum genauen Ausrichten jeweiliger Enden der Ausgangsfasern an jeweiligen Ausgangsfaserorten; und einen sphärischen Reflektor, der jeder Ausgangsfaser zugeordnet ist, wobei jeder Reflektor einen unterschiedlichen vorbestimmten Teil des Lichtkegels, der von der Eingangsfaser ausgeht, empfängt, und ein Krümmungszentrum zwischen dem Eingangsfaserort und dem zugehörigen Ausgangsfaserort aufweist, um das empfangene Licht zu der jeweiligen einen von den Ausgangsfasern zu reflektieren, **dadurch gekennzeichnet,** daß die sphärischen Reflektoren (30, 35) unterschiedliche Krümmungsradien aufweisen und in verschiedenen Abständen von dem Ort der Eingangsfaser (12) angeordnet sind, und daß einer der Reflektoren einen zentralen konischen Teil des von der Eingangsfaser ausgehenden Lichtkegels empfängt und der andere Reflektor den verbleibenden Randteil davon empfängt.

4. Eine optische Kopplungsvorrichtung nach Anspruch 1, 2 oder 3, **dadurch gekennzeichnet,** daß der Teil des Kegels, der von dem sphärischen Reflektor (30), der am nächsten an der Eingangsfaser (12) angeordnet ist, empfangen wird, nicht variabel ist.

5. Eine optische Kopplungsvorrichtung nach Anspruch 4, **dadurch gekennzeichnet,** daß die Kopplungsvorrichtung einen transparenten Körper (22, 23) umfaßt, welcher die Eingangs- und und die Ausgangsfaserorte angeordnet auf einer Endoberfläche davon, und eine sphärische konvexe Oberfläche (30) an seiner gegenüberliegenden Endfläche aufweist, wobei die sphärische konvexe Oberfläche (30) den gesamten von der Eingangsfaser (12) ausgehenden Lichtkegel schneidet, aber einen reflektierenden Überzug nur auf einem Teil (30') seiner Oberfläche aufweist, und dadurch den sphärischen Reflektor, der der Eingangsfaser (12) am nächsten ist, bildet.

6. Eine optische Kopplungsvorrichtung nach Anspruch 4, sowie nach Anspruch 1 oder 2, **dadurch gekennzeichnet,** daß die Kopplungsvorrichtung einen transparenten Körper (22, 52) umfaßt, welcher den Eingangsfaserort und die Ausgangsfaserorte angeordnet auf einer Endfläche davon und eine sphärische konvexe Oberfläche (53) auf seiner gegenüberliegenden Endfläche aufweist, wobei die sphärische konvexe Oberfläche (53) nur einen Teil des von der Eingangsfaser (12) ausgehenden Lichtkegels schneidet, und einen reflektierenden Überzug auf seiner gesamten Oberfläche aufweist, welcher in dem Weg des von der Eingangsfaser ausgehenden Lichtes angeordnet ist, um dadurch den sphärischen Reflektor, der der Eingangsfaser am nächsten ist, zu bilden.

7. Eine optische Kopplungsvorrichtung nach Anspruch 6, **dadurch gekennzeichnet,** daß der durchsichtige Körper (22, 52) ein zylindrisches Element (22), welches den Eingangsfaserort und die Ausgangsfaserorte angeordnet auf einer ebenen Endfläche davon aufweist, und eine die sphärische konvexe Oberfläche umfassendes plankonvexes Element (52), welches an der anderen ebenen Endfläche des zylindrischen Elements befestigt ist, umfaßt, wobei das plankonvexe Element (52), wenn es in einer Richtung parallel zur Achse des zylindrischen Elements betrachtet wird, sektorförmig ist.

8. Eine optische Kopplungsvorrichtung nach Anspruch 7, **dadurch gekennzeichnet,** daß die Winkelausdehnung des Sektors 180° beträgt, so daß das plankonvexe Element (52) halbkreisförmig ist, wenn es in einer Richtung parallel zur Achse des zylindrischen Elementes (22) betrachtet wird.

9. Eine optische Kopplungsvorrichtung nach Anspruch 5, **dadurch gekennzeichnet,** daß der transparente Körper ein zylindrisches Element (22), welches den Eingangsfaserort und die Ausgangsfaserorte angeordnet auf einer ebenen Endfläche davon aufweist und ein plankonvexes Element (23), das an der anderen ebenen Endfläche des zylindrischen Elements (22) befestigt ist, umfaßt.

10. Eine optische Kopplungsvorrichtung nach wenigstens einem der Ansprüche 5 bis 9, **dadurch gekennzeichnet,** daß ein plankonkaves Element (42) mit einem an die konvexe Oberfläche (30) angepaßten Krümmungsradius mit dem transparenten Körper (22, 23) zusammengesetzt ist, um für eine ebene Oberfläche auf der Seite des plankonkaven Elements (30), die von dem Eingangsfaserort und den Ausgangsfaserorten entfernt ist, zu bilden, wobei ein weiteres plankonvexes Element (43) mit einem reflektierenden Überzug auf seiner konvexen Oberfläche (45) auf der ebenen Oberfläche angebracht ist, um einen zweiten der sphärischen Reflektoren (45) zu bilden.

11. Eine optische Kopplungsvorrichtung nach Anspruch 1 oder 2, **dadurch gekennzeichnet,** daß die Kopplungsvorrichtung einen transparenten Körper (22, 23) mit dem Eingangsfaserort und den Ausgangsfaserorten auf einer Endfläche davon und mit einer sphärischen konvexen Oberfläche (30) an seiner gegenüberliegenden Endfläche umfaßt, wobei eine weitere Oberfläche auf der Seite der konvexen Oberfläche (30), die entfernt von der Eingangsfaser (12) ist, angeordnet ist, um eine Lücke (82) dazwischen zu bilden, die auf einer Seite durch die konvexe Oberfläche (30) begrenzt ist, und daß eine Einrichtung vorgesehen ist, um eine kontrollierbare Menge von reflektierendem Material in die Lücke (82) einzuführen, wodurch ein Reflektor von kontrollierbar variabler Größe und einem Radius, der gleich dem der konvexen Oberfläche (30) ist, gebildet wird, wobei der Reflektor den zu der Eingangsfaser (12) nächstliegenden der sphärischen Reflektoren bildet.

12. Eine optische Kopplungsvorrichtung nach Anspruch 11, **dadurch gekennzeichnet,** daß die weitere Oberfläche eine Oberfläche eines Körpers ist, welcher einen sphärischen Reflektor bildet, welcher den Teil des Lichtkegels empfängt, der nicht von dem Reflektor mit variabler Größe empfangen wird, und welcher solches Licht zu dem ihm gehörigen Ausgangsfaserort reflektiert, wobei die Kopplungsvorrichtung enthält: eine Einrichtung zum Bilden eines Reservoirs in Fluidverbindung mit der Lücke (82); ein Volumen von Quecksilber (87), das normalerweise einen ersten Teil des Reservoirs und der Lücke einnimmt; ein Volumen eines Elektrolyts, das normalerweise einen verbleibenden zweiten Teil des Reservoirs und der Lücke einnimmt; eine erste Elektrode (90), die in dem Teil des Reservoirs angeordnet ist, das normalerweise von dem Quecksilbervolumen eingenommen wird; und eine zweite Elektrode (97), die in dem Teil angeordnet ist, der normalerweise von dem Elektrolyten eingenommen wird; wobei das Anlegen einer Spannung über den Elektroden einen Oberflächenspannungsgradienten bewirkt, welcher eine kontrollierte Bewegung des Quecksilbers in die Lücke hervorruft, wodurch ein kontrollierbar variabler Empfangsgrad des Lichtkegels erreicht wird.

FIG.__IA.

FIG.__IB.

FIG.__2.

FIG.__IC.

FIG.__3A.

FIG.__3B.

FIG._4.

FIG._5.

FIG._6.

FIG._7.